# FASCICULE DE BREVET EUROPEEN

(11) **EP 4 002 624 B1**
(45) Date de publication et mention de la délivrance du brevet: **30.07.2025**
(21) Numéro de dépôt: 21209329.8
(22) Date de dépôt: 19.11.2021
(51) Int. Cl.: H02J 7/34, H02J 7/00, H01M 10/44, B60L 58/18, B60L 58/13, B60L 50/60, H01M 10/42, H01M 10/48, H01M 10/46, H02J 1/10, B60L 3/00

(54) **SYSTÈME D'ALIMENTATION ÉLECTRIQUE**
STROMVERSORGUNGSSYSTEM
ELECTRICAL POWER SUPPLY SYSTEM

(30) Priorité: 23.11.2020 FR 2011988
(43) Date de publication de la demande: 25.05.2022
(73) Titulaire: Commissariat à l'Energie Atomique et aux Energies Alternatives, 75015 Paris (FR)
(72) Inventeur: DESPESSE, Ghislain, 38054 GRENOBLE CEDEX 09 (FR); BACQUET, Sylvain, 38054 GRENOBLE CEDEX 09 (FR)
(74) Mandataire: INNOV-GROUP

(56) Documents cités:
- EP-A1- 1 223 653
- EP-A1- 2 255 990
- WO-A1-2012/117111
- WO-A1-2013/007810
- KR-B1- 102 174 990
- US-A1- 2018 009 400
- US-A1- 2019 294 173
- US-B2- 9 493 090

## Description

### Domaine technique de l'invention

La présente invention se rapporte à un système d'alimentation électrique à plusieurs batteries, comprenant des moyens de gestion de ces batteries pour alimenter plusieurs équipements consommateurs.

### Etat de la technique

Pour alimenter plusieurs moteurs électriques d'une même installation, par exemple un véhicule électrique ou hybride, il est connu d'utiliser un pack-batterie qui comporte plusieurs batteries connectées en parallèle. Dans un véhicule électrique ou hybride, le pack batterie est destiné à fournir en énergie électrique le moteur de traction, mais aussi le moteur destiné à la climatisation, le moteur dédié à la direction assistée, ainsi que la batterie auxiliaire 12V ou 24V destinée à l'alimentation du réseau de bord du véhicule. Le pack batterie est connecté sur un bus DC et des convertisseurs DC/AC pour chaque moteur et DC/DC pour la batterie auxiliaire sont connectés sur ce bus pour fournir la tension souhaitée à chaque équipement consommateur. Cette solution permet ainsi d'alimenter des moteurs ayant des amplitudes et fréquences de fonctionnement différentes.

Récemment, il a été proposé de s'affranchir de l'emploi de ces convertisseurs, afin de gagner en poids, en encombrement et en coût. Pour cela, chaque batterie du pack peut être réalisée selon une architecture dite à cellules commutées. Cette solution permet de remplacer chaque convertisseur. Dans cette architecture, chaque cellule peut être commandée de manière individualisée. Plusieurs cellules connectées en série et/ou parallèle peuvent former un module. Chaque cellule d'une batterie peut en effet être commutée entre un état actif et un état inactif grâce à des moyens de commutation adaptés connectés en série et parallèle de la cellule. Un système de commande est alors chargé de commander les moyens de commutation pour faire varier la tension fournie par chaque batterie dans sa totalité. Ce type d'architecture est bien connu et notamment décrit dans les demandes de brevet n°WO2013/007810A1**,** WO2012/117111A1**,** WO2012/117110A2**,** WO2012/117/109A1 ou US9493090B2**.**

La demande de brevet US2018/009400A1 décrit une autre architecture comprenant deux batteries et disposant de plusieurs configurations de fonctionnement.

L'utilisation de la technologie à cellules commutées permet par ailleurs de :
∘ Produire une tension de forme adaptée à la charge (tension, fréquence, forme d'onde, etc...) ;
∘ Améliorer l'autonomie du système ;
∘ Améliorer la disponibilité du système ;

A partir de cette nouvelle architecture à cellules commutées, chaque batterie du pack-batterie peut être dédiée à l'alimentation d'un moteur électrique distinct, les batteries ne sont alors plus mises en commun pour alimenter les moteurs électriques, via un bus DC et des convertisseurs adaptés. Cela nécessite de bien dimensionner chaque batterie à l'équipement consommateur qu'elle est censée alimenter. Ce dimensionnement est cependant complexe car la batterie ne doit pas être d'une trop grosse capacité, pour limiter le poids et l'encombrement, ni d'une capacité trop faible pour éviter de tomber en panne.

Le but de l'invention est de proposer un système d'alimentation électrique qui comporte plusieurs batteries, avantageusement à cellules commutées, associées chacune à un équipement consommateur distinct, ce système permettant de garantir la fourniture d'énergie électrique aux équipements consommateurs, sans surdimensionner ses batteries.

### Exposé de l'invention

Ce but est atteint par un système d'alimentation électrique comprenant :
- Plusieurs batteries électriques, chaque batterie comportant plusieurs cellules connectées en série et/ou parallèle et des moyens de commutation distincts attachées à chaque cellule ou à un groupe de plusieurs cellules, lesdites plusieurs batteries comportant des batteries dites principales dédiées chacune à la fourniture d'énergie électrique à destination d'un équipement consommateur distinct,
- Des moyens de traitement et de commande,

Les moyens de traitement et de commande comportant :
- Des moyens de sélection d'au moins une batterie dite de secours parmi lesdites plusieurs batteries, la batterie de secours sélectionnée étant une batterie dont le courant de sortie est nul ;
- Des moyens de détermination d'une configuration de fonctionnement parmi au moins deux configurations de fonctionnement :
   ∘ Une première configuration dans laquelle la batterie de secours sélectionnée vient au soutien de l'une des batteries principales ;
   ∘ Une deuxième configuration dans laquelle la batterie de secours sélectionnée vient charger au moins une batterie principale ;
- Des moyens de commande adaptés pour assurer une configuration de connexion de la batterie de secours sélectionnée à la batterie principale selon la configuration de fonctionnement déterminée.

Et, appliqués à chaque batterie principale, les moyens de traitement et de commande comportent également :
- Un premier module d'acquisition de l'état de charge réel de chaque batterie principale,
- Un module de détermination d'un écart entre l'état de charge réel acquis et un état de charge théorique et/ou d'une pente de variation de l'état de charge réel,
- Un premier module de comparaison dudit écart avec un premier écart seuil et/ou de la pente de variation avec une première pente seuil, et
- Un premier module de commande activé lorsque l'écart déterminé dépasse ledit premier écart seuil et/ou lorsque la pente déterminée dépasse ladite première pente seuil et configuré pour activer un soutien à la batterie principale à l'aide de la batterie secondaire en maintenant la batterie principale connectée à son équipement consommateur.

Selon une particularité, les moyens de traitement et de commande sont configurés pour mettre en œuvre un mode de traitement choisi parmi lesdits modes de traitements suivants :
- Un premier mode de traitement dans lequel, lors de son utilisation, l'état de charge réel de chaque batterie principale est maintenu dans un état de charge théorique, déterminé en fonction de son cycle d'utilisation ;
- Un deuxième mode de traitement dans lequel l'état de charge de chaque batterie principale est maintenu au-dessus d'une valeur seuil ;
- Un troisième mode de traitement dans lequel les moyens de traitement et de commande sont configurés pour surveiller le niveau de puissance requis par chaque équipement consommateur par rapport à un niveau de puissance seuil.

Selon une autre particularité, le système comporte des premiers moyens de commutation comportant plusieurs interrupteurs agencés pour commander la connexion ou la déconnexion de chaque batterie principale de l'équipement consommateur auquel elle est associée.

Selon une autre particularité, le système comporte des deuxièmes moyens de commutation comportant plusieurs interrupteurs agencés pour commander la connexion ou la déconnexion de chaque batterie principale avec chaque autre batterie principale.

Selon une autre particularité, le système comporte des troisièmes moyens de commutation commandables par les moyens de traitement et de commande et agencés pour commander la connexion ou la déconnexion de chaque batterie à un réseau électrique d'alimentation.

Selon une autre particularité, lesdites plusieurs batteries comportent une batterie, dite batterie auxiliaire, non associée à un équipement consommateur.

Selon une autre particularité, le système comporte des quatrièmes moyens de commutation commandables par les moyens de traitement et de commande et agencés pour commander la connexion ou la déconnexion de la batterie auxiliaire avec chaque batterie principale.

Selon une autre particularité, appliqué à chaque batterie principale, les moyens de traitement et de commande comportent :
- Un deuxième module de comparaison dudit écart avec un deuxième écart seuil, supérieur au premier écart seuil, et/ou de la pente de variation avec une deuxième pente seuil, supérieure à la première pente seuil, et
- Un deuxième module de commande activé lorsque l'écart déterminé dépasse ledit deuxième écart seuil et/ou lorsque la pente déterminée dépasse ladite deuxième pente seuil et configuré pour activer une déconnexion de la batterie principale de son équipement consommateur et une connexion pour recharge de ladite batterie principale à la batterie secondaire ou à un réseau électrique.

Selon une autre particularité, appliqué à chaque batterie principale, les moyens de traitement et de commande comportent :
- Un deuxième module d'acquisition de la puissance électrique fournie par chaque batterie principale à son équipement consommateur,
- Un troisième module de comparaison de la puissance fournie par chaque batterie avec une valeur seuil,
- Un troisième module de commande activé lorsque ladite puissance fournie par une batterie principale dépasse ladite valeur seuil et configuré pour activer un soutien à la batterie principale à l'aide de la batterie de secours.

Selon une autre particularité, lesdites plusieurs batteries comportent chacune plusieurs cellules connectées en série et/ou parallèle, chaque cellule comportant des moyens de commutation.

L'invention concerne également un procédé de commande mis en œuvre dans un système d'alimentation électrique tel que défini ci-dessus, ledit procédé comportant les étapes suivantes :
- Acquisition de l'état de charge réel de chaque batterie principale,
- Détermination d'un écart entre l'état de charge réel et un état de charge théorique et/ou d'une pente de variation de l'état de charge réel,
- Première comparaison dudit écart avec un premier écart seuil et/ou de la pente de variation avec une première pente seuil, et
- Lorsque l'écart déterminé dépasse ledit premier écart seuil et/ou lorsque la pente déterminée dépasse ladite première pente seuil, génération d'une commande d'une recharge de la batterie principale à l'aide de la batterie de secours en maintenant la batterie principale connectée à son équipement consommateur.

Selon une particularité, le procédé comporte également les étapes suivantes :
- Deuxième comparaison dudit écart avec un deuxième écart seuil, supérieur au premier écart seuil, et/ou de la pente de variation avec une deuxième pente seuil, supérieure à la première pente seuil, et
- Lorsque l'écart déterminé dépasse ledit deuxième écart seuil et/ou lorsque la pente déterminée dépasse ladite deuxième pente seuil, génération d'une commande de déconnexion de la batterie principale de son équipement consommateur et une connexion pour recharge de ladite batterie principale à la batterie de secours ou à un réseau électrique.

Selon une autre particularité, le procédé comporte les étapes suivantes :
- Acquisition de la puissance électrique fournie par chaque batterie principale à son équipement consommateur,
- Comparaison de la puissance fournie par chaque batterie avec une valeur seuil,
- Lorsque ladite puissance fournie par une batterie principale dépasse ladite valeur seuil, activation d'un soutien à la batterie principale à l'aide de la batterie de secours.

L'invention concerne également l'utilisation du système d'alimentation électrique tel que défini ci-dessus, pour alimenter des moteurs électriques embarqués dans un véhicule électrique ou hybride.

### Brève description des figures

D'autres caractéristiques et avantages vont apparaître dans la description détaillée qui suit, en liaison avec les figures annexées listées ci-dessous :
- La figure 1 représente de manière schématique le système d'alimentation électrique conforme à l'invention ;
- La figure 2 représente un schéma illustrant le principe de fonctionnement de l'invention ;
- La figure 3A, la figure 3B, la figure 3C et la figure 3D représentent quatre cas de fonctionnement du système d'alimentation électrique de l'invention ;
- La figure 4 et la figure 5 représentent plusieurs diagrammes illustrant le principe de fonctionnement du système d'alimentation électrique de l'invention ;
- La figure 6A, la figure 6B et la figure 6C montrent trois algorithmes exécutables par les moyens de traitement et de commande du système de l'invention ;
- La figure 7 montre le schéma d'une batterie à cellules commutées ;

### Description détaillée d'au moins un mode de réalisation

Dans la suite de la description, le terme DC signifie "Direct Current" pour courant continu, le terme AC signifie "Alternating Current" pour courant alternatif. On parlera aussi de tension AC pour exprimer une tension alternative et de tension DC pour exprimer une tension continue.

L'invention concerne un système d'alimentation électrique qui est notamment parfaitement adapté pour être implanté dans un véhicule électrique ou hybride. Il est alors embarqué à bord du véhicule et participe à la traction du véhicule et à l'alimentation de divers équipements consommateurs du véhicule.

Le système d'alimentation électrique comporte un pack batterie.

Dans le cadre de l'invention, le pack batterie comporte plusieurs batteries, dites batteries principales B_1, B_2, B_3.

Chaque batterie principale peut comporter un ou plusieurs modules, chaque module comportant plusieurs cellules de stockage d'énergie électrique.

Par cellule, on entend une cellule élémentaire ou un groupe de cellules élémentaires placées en série et/ou en parallèle. Par cellule élémentaire, il peut s'agir d'un élément de stockage (cellule de batterie, capacité électrique, micro-batterie, assemblage de plusieurs technologies de stockage), d'un générateur (pile à combustible, pile Zinc-air, cellule photovoltaïque, ou d'une combinaison des deux (générateur associé à un élément de stockage tampon).

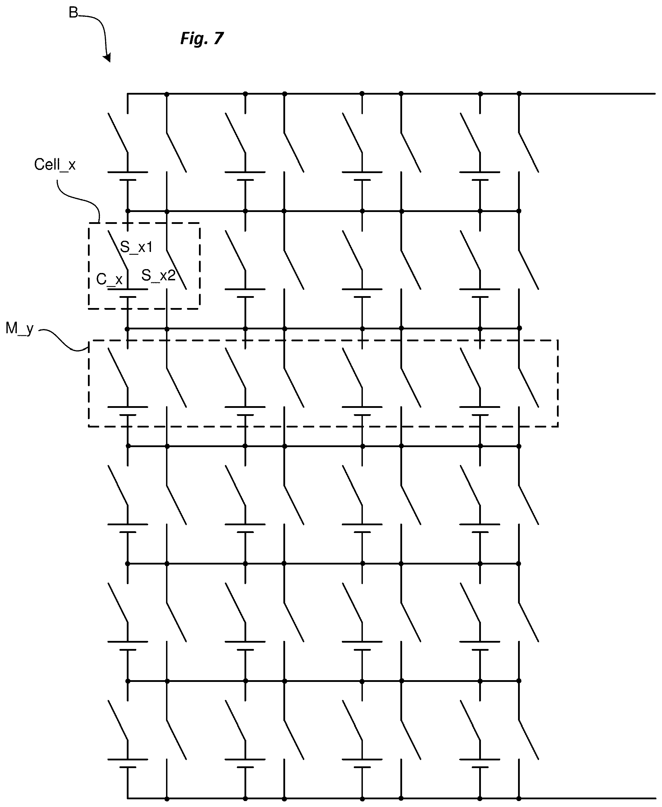

De manière avantageuse, chaque batterie principale B_1, B_2, B_3 du pack est réalisée selon une architecture dite à cellules commutées. Cette solution permet de remplacer le convertisseur DC/AC en sortie du pack batterie. Dans cette architecture, comme illustré par la figure 7, chaque cellule Cell_x de la batterie B peut être commandée de manière individualisée. Plusieurs cellules connectées en série et/ou parallèle peuvent former un module M_y. Chaque cellule du pack-batterie peut en effet être commutée entre un état actif et un état inactif grâce à des moyens de commutation S_x1, S_x2 adaptés connectés en série et parallèle de sa capacité C_x. Un système de commande est alors chargé de commander les moyens de commutation pour faire varier la tension fournie par chaque batterie dans sa totalité. Ce type d'architecture est bien connu et notamment décrit dans les documents brevets n°WO2013/007810A1**,** WO2012/117111A1**,** WO2012/117110A2**,** WO2012/117/109A1 **ou** US9493090B2 déjà évoqués ci-dessus.

Chaque batterie principale B_1, B_2, B_3 du pack est dite dans un état actif lorsqu'elle est en cours de fonctionnement et qu'elle fournit un courant destiné à l'alimentation d'un équipement consommateur (voir ci-après) particulier qui lui est associé.

Une batterie principale est dite dans un état secondaire lorsqu'elle est inactive et que son courant en sortie est nul. Autrement dit, elle n'alimente pas l'équipement consommateur auquel elle est associée.

L'invention est décrite ci-dessous pour plusieurs batteries distinctes, par exemple d'un même pack batterie, mais il faut comprendre que l'invention peut s'appliquer à plusieurs pack-batteries distincts, chaque pack-batterie étant dédié à l'alimentation d'un équipement consommateur distinct et comportant alors une ou plusieurs batteries.

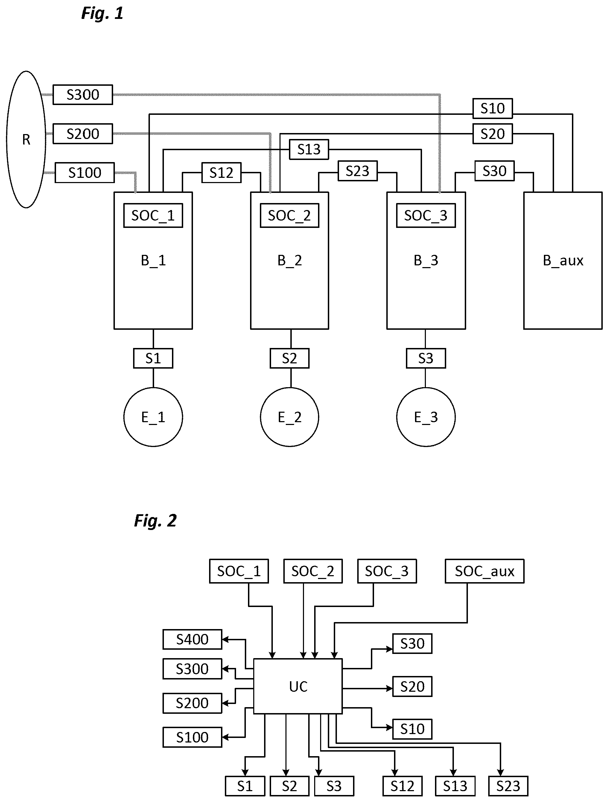

Sur la figure 1, le système est représenté avec trois batteries principales B_1, B_2, B_3 connectées chacune à un équipement consommateur E_1, E_2, E_3 distinct.

Dans le cadre de l'invention, chaque batterie principale B_1, B_2, B_3 est destinée à fournir de l'énergie électrique à son équipement consommateur E_1, E_2, E_3 distinct, par exemple un moteur électrique. Chaque batterie principale B_1, B_2, B_3 peut être connectée à son équipement consommateur, en direct, via une architecture monophasée ou triphasée.

Par équipement consommateur, il faut comprendre une ligne d'alimentation sur laquelle peut être alimenté un ou plusieurs appareils qui fonctionnent sur une même tension (même amplitude, même fréquence, même phase). Le nombre de batteries employé est essentiellement défini par le nombre de tensions différentes qu'il faut fournir. Par exemple, pour alimenter des moteurs à vitesses variables qui fonctionnent avec des fréquences et/ou des tensions différentes, il faut autant de batteries que de moteurs. Par contre, certains équipements qui fonctionnent sur une tension commune tel qu'en 230V-50Hz, ou en 48VDC peuvent partager une même ligne d'alimentation. L'invention porte ainsi sur les cas où il est nécessaire de fournir au moins deux lignes différentes d'alimentation. A titre d'exemple, la figure 1 montre trois équipements consommateurs E_1, E_2, E_3 distincts, associés chacun à une batterie B_1, B_2, B_3 distincte.

Le système peut également comporter une batterie B_aux, dite batterie auxiliaire, qui n'est associée à aucun équipement consommateur et n'est employée que pour venir se connecter à au moins une batterie principale du pack, pour venir en soutien de cette batterie principale dans l'alimentation de son équipement électrique et/ou échanger de l'énergie avec cette batterie principale. Cette batterie auxiliaire B_aux présente une architecture électrique, à cellules commutées, qui est identique à celle des batteries principales et qui a été décrite ci-dessus.

Sur la figure 1, la batterie auxiliaire est représentée mais il faut considérer que cette batterie auxiliaire B_aux est optionnelle. On verra en effet que le système de l'invention peut fonctionner sans la présence de cette batterie auxiliaire.

Le système comporte des moyens de traitement et de commande UC qui sont chargés de :
- Surveiller l'état de charge de chaque batterie principale B_1, B_2, B_3 et de la batterie auxiliaire (si présente) ;
- Surveiller le courant et la tension délivrés par chaque batterie principale B_1, B_2, B_3 à destination de son équipement consommateur E_1, E_2, E_3 respectif et le courant et la tension délivrés par la batterie auxiliaire B_aux (si présente) ;
- Sélectionner une batterie de secours parmi les batteries principales B_1, B_2, B_3 et la batterie auxiliaire B_aux si présente ; si une batterie auxiliaire est présente, les moyens de traitement et de commande UC peuvent sélectionner par défaut la batterie auxiliaire B_aux comme batterie de secours ;
- Déterminer une configuration de fonctionnement parmi plusieurs configurations de fonctionnement ;
- Commander des moyens de commutation adaptés pour assurer une configuration de connexion de la batterie de secours sélectionnée à la configuration de fonctionnement déterminée ;

Les moyens de traitement et de commande UC sont configurés pour sélectionner une batterie de secours B_S parmi les batteries du système. Pour sélectionner la batterie de secours, les moyens de traitement et de commande UC tiennent compte de :
- La présence/absence d'une batterie auxiliaire B_aux dans le système ;
- L'état de fonctionnement de chaque batterie principale, c'est-à-dire si la batterie principale est dans un état actif, c'est-à-dire en cours d'alimentation de son équipement consommateur ou dans son état secondaire ;

Si une batterie auxiliaire est présente et que celle-ci dispose d'un état de charge suffisamment élevé, les moyens de traitement et de commande UC sélectionnent cette batterie auxiliaire comme la batterie de secours.

Si la batterie auxiliaire n'est pas présente ou si son état de charge est insuffisant, les moyens de traitement et de commande sont chargés de sélectionner une batterie principale comme la batterie de secours B_S.

La batterie principale sélectionnée par les moyens de traitement et de commande comme batterie de secours est une batterie qui est dans un état secondaire, c'est-à-dire à l'arrêt et dont le courant en sortie est nul.

Les moyens de traitement et de commande UC mémorisent un identifiant de la batterie sélectionnée comme batterie de secours B_S.

De manière générale, on peut distinguer plusieurs configurations de fonctionnement du système :
- Une première configuration dans laquelle la batterie de secours B_S sélectionnée vient au soutien de l'une des batteries principales ;
- Une deuxième configuration dans laquelle la batterie de secours B_S sélectionnée vient charger au moins une batterie principale ;

Il faut noter qu'un transfert d'énergie d'une batterie à une autre induit des pertes : pertes au cours du transfert d'énergie, puis pertes à l'alimentation de l'équipement. En revanche, une assistance permet au contraire de réduire les pertes : pas de transfert d'énergie d'une batterie à l'autre (pas de pertes de transfert) et alimentation de l'équipement par deux sources qui se partagent le courant. Le courant est en effet plus faible sur chaque batterie et les pertes sont donc plus faibles également. Les pertes peuvent être divisées par deux si les deux batteries sont identiques et sollicitées de manière identique.

Pour mettre en œuvre les différentes configurations de fonctionnement, plusieurs configurations de connexion peuvent être commandées par les moyens de traitement et de commande UC.

Pour déterminer la configuration de connexion et donc la configuration de fonctionnement, les moyens de traitement et de commande UC s'appuient sur l'état de charge de chaque batterie principale et sur celui de la batterie auxiliaire B_aux du système, si cette dernière est présente.

Les moyens de traitement et de commande UC déterminent l'état de charge de chaque batterie principale et celui de la batterie auxiliaire, si présente, et sont chargés de surveiller ces paramètres.

Comme indiqué ci-dessus, les moyens de commande et traitement UC peuvent choisir différents modes de traitement :
- Un premier mode de traitement dans lequel, lors de son utilisation, l'état de charge réel (SOC_R) de chaque batterie principale est maintenu dans un état de charge théorique (SOC_TH), déterminé en fonction de son cycle d'utilisation ;
- Un deuxième mode de traitement dans lequel l'état de charge de chaque batterie principale est maintenu au-dessus d'une valeur seuil ;
- Un troisième mode de traitement dans lequel les moyens de traitement et de commande UC sont configurés pour surveiller le niveau de puissance requis par chaque équipement consommateur. La batterie de secours est appelée en renfort d'une batterie principale pour pouvoir fournir la puissance demandée par son équipement consommateur, et ce, quel que soit l'état de charge de la batterie principale concernée par l'alimentation de cet équipement consommateur (même si cet état de charge est en dessus de son état de charge théorique SOC_TH ou en dessus d'une valeur seuil).

Ces modes de traitement sont cumulatifs et les moyens de traitement et de commande UC sont configurés pour exécuter au moins l'un de ces modes de traitement.

L'état de charge théorique SOC_TH peut être déterminé par les moyens de traitement et de commande UC et correspond à l'état de charge dans lequel la batterie devrait se trouver si elle est utilisée suivant le régime de fonctionnement en cours. Cet état de charge théorique suit une courbe décroissante donnée en fonction du temps. Il peut être recalculé à tout moment si le régime de fonctionnement de la batterie est modifié. Cet état de charge théorique peut notamment être déterminé en tenant compte par exemple de l'état de santé de la batterie (SOH = "State Of Health"), de sa température, du niveau de courant qu'elle peut délivrer et du profil de consommation estimé pour la suite.

Dans le premier mode de traitement, les moyens de traitement et de commande UC sont amenés à connecter la batterie de secours B_S sélectionnée à la batterie principale en cours d'utilisation pour soutenir cette dernière dans l'alimentation de son équipement consommateur et assurer que son état de charge réel SOC_R suive bien un état de charge théorique SOC_TH.

Dans le deuxième mode de traitement, les moyens de traitement et de commande UC sont amenés à déconnecter de son équipement consommateur, la batterie principale dont l'état de charge passe en dessous de la valeur seuil, et à la connecter à la batterie de secours B_S sélectionnée pour la recharger. Dans ce mode de fonctionnement, l'équipement consommateur consomme trop d'énergie électrique, et la combinaison de la batterie principale et de la batterie de secours n'est pas suffisante pour assurer l'alimentation de l'équipement consommateur en suivant l'évolution théorique de l'état de charge.

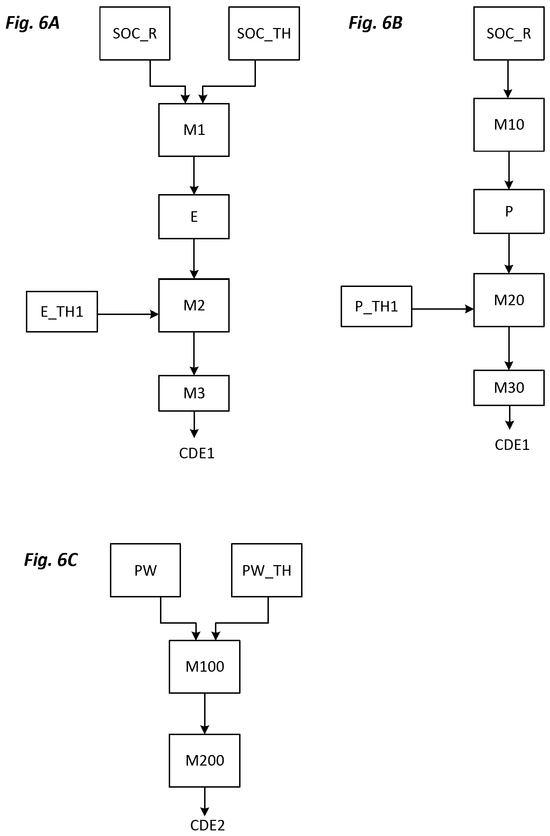

De manière non limitative, en référence à la figure 6A, les moyens de traitement et de commande UC peuvent comporter un module logiciel de détermination M1, configuré pour déterminer l'écart E entre l'état de charge réel SOC_R préalablement acquis et l'état de charge théorique SOC_TH calculé, et un module M2 de comparaison de cet écart E avec un premier écart seuil E_TH1. Lorsque l'écart déterminé dépasse le premier écart seuil, les moyens de traitement et de commande UC sont configurés pour activer un module de commande M3 chargé d'envoyer des commandes CDE1 correspondant à la mise en œuvre du premier mode de fonctionnement. Autrement dit, lorsque l'état de charge de la batterie principale est trop éloigné de l'état de charge théorique, les moyens de traitement et de commande UC activent une recharge de la batterie principale à l'aide de la batterie de secours, afin d'assister la batterie principale dans l'alimentation de son équipement consommateur.

En variante de réalisation ou en complément, les moyens de traitement et de commande UC peuvent s'appuyer sur la pente de variation de l'état de charge de la batterie principale et sur une comparaison de cette pente avec une première pente seuil. Ce principe est représenté sur la figure 6B, sur laquelle est représenté un module de détermination M10 de la pente P de variation de l'état de charge réel de la batterie principale, un module de comparaison M2 de cette pente P avec une première pente seuil P_TH1, et un module de commande M30 configuré pour envoyer les commandes CDE1 lorsque la pente dépasse la pente seuil. La pente seuil théorique peut être mise à jour durant le fonctionnement, par exemple pour viser une fin de décharge synchronisée de toutes les batteries principales et ainsi profiter pleinement de la capacité de chacune (c'est-à-dire éviter qu'une batterie principale n'arrive en fin de décharge avant les autres et qu'elle limite l'autonomie ou les fonctionnalités du système alors que les autres batteries principales disposent encore d'énergie).

Par ailleurs, dans une réalisation complémentaire, les moyens de traitement et de commande UC peuvent également activer le deuxième mode de traitement, par exemple lorsque :
- L'écart déterminé est supérieur à un deuxième écart seuil (supérieur au premier écart seuil), et/ou
- Lorsque la pente de variation de l'état de charge est supérieure à une deuxième pente seuil, autrement dit lorsque l'état de charge de la batterie principale baisse trop brusquement.

Les deux algorithmes des figures 6A et 6B restent valables pour cette réalisation complémentaire, le signal de commande de sortie étant déterminé pour activer le deuxième mode de fonctionnement.

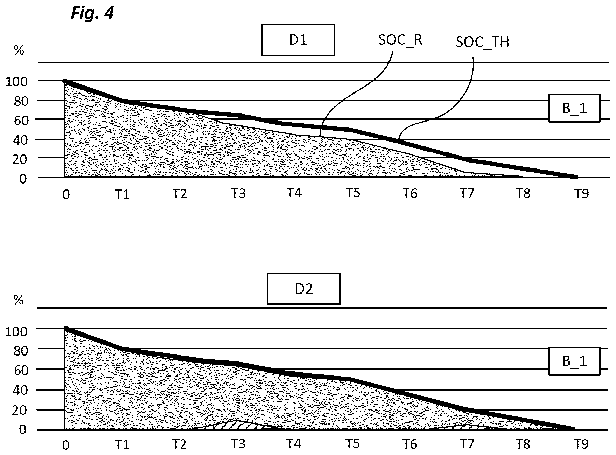

La figure 4 montre un premier diagramme D1 représentant l'évolution de l'état de charge réel d'une batterie principale lors de son utilisation, en comparaison avec l'évolution théorique de son état de charge pour cette utilisation.

La figure 4 montre un deuxième diagramme D2 illustrant l'apport en charge de la batterie de secours B_S afin de maintenir l'état de charge réel SOC_R de la batterie principale (ici la batterie B_1) en phase avec son état de charge théorique SOC_TH. Sur ce deuxième diagramme, la batterie de secours est connectée à cette batterie principale à T3 et à T7 pour la soutenir dans l'alimentation de la charge, et éventuellement légèrement la recharger, et ainsi lui permettre de réaligner son état de charge réel avec l'état de charge théorique.

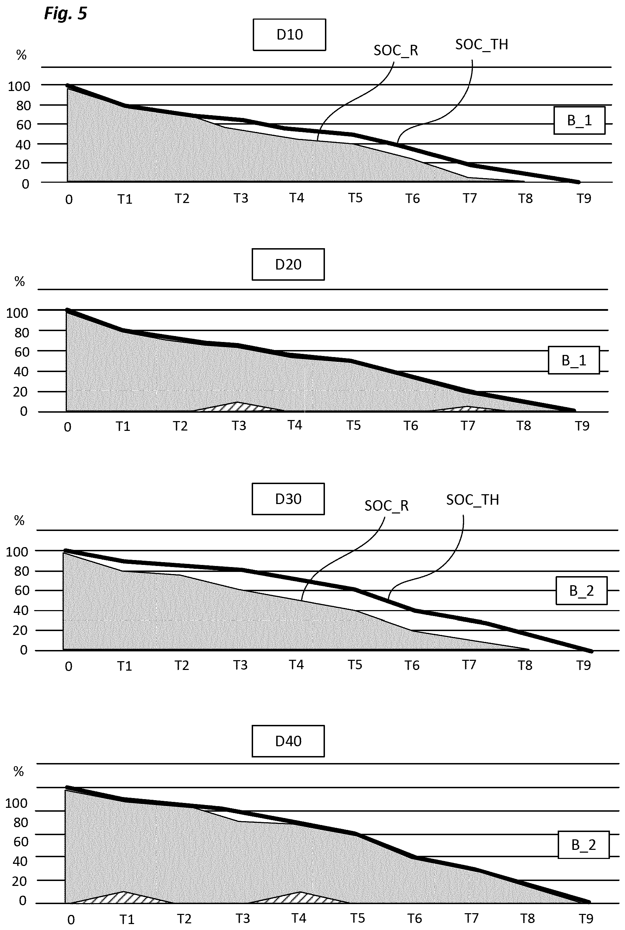

La figure 5 montre quatre diagrammes illustrant le principe de l'invention pour l'assistance de deux batteries principales.

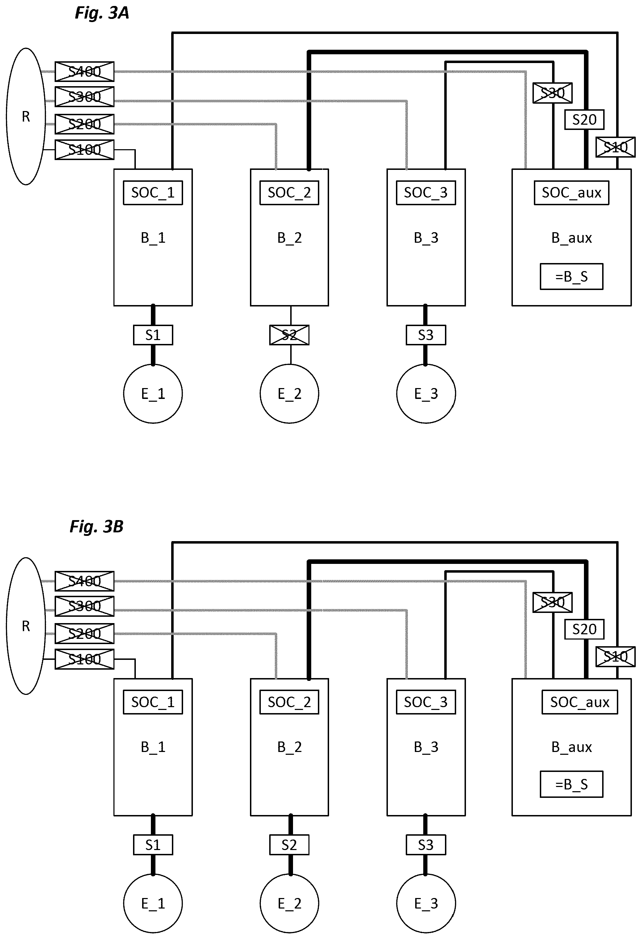

Les deux premiers diagrammes D10, D20 sont identiques à ceux de la figure 3A et illustrent l'assistance apportée par la batterie de secours à une première batterie principale.

Les deux autres diagrammes D30, D40 illustrent l'assistance apportée par la batterie de secours à une deuxième batterie principale du pack. Comme la batterie de secours ne peut soutenir deux batteries principales simultanément, les moyens de traitement et de commande déterminent en priorité quelle batterie principale doit être soutenue en premier. Au temps T3, les deux batteries principales doivent être soutenues. Au temps T3, les moyens de traitement et de commande commandent alors en priorité la connexion de la batterie de secours B_S à la première batterie principale B_1, puis après déconnexion, connecte ensuite la batterie de secours B_S à la deuxième batterie principale B_2 au temps T4.

Pour établir la priorité, les moyens de traitement et de commande UC peuvent s'appuyer sur la pente de variation de l'état de charge réel de la batterie principale par rapport à l'état de charge théorique. La batterie principale dont l'état de charge réel s'écarte le plus fortement de son état de charge théorique est assistée en priorité. Bien entendu, d'autres règles pourraient s'appliquer.

En référence à la figure 6C, dans le troisième mode de traitement, permettant à la batterie de secours B_S de soutenir une batterie principale pour passer un pic de puissance, les moyens de traitement et de commande UC définissent un seuil de puissance PW_TH à partir duquel une batterie principale a besoin d'un soutien. Ce seuil de puissance PW_TH peut être déterminé par les moyens de traitement et de commande UC en fonction des caractéristiques de la batterie principale et de son état en cours (état de charge, température, état de santé, impédance interne). Les moyens de traitement et de commande UC comporte un module d'acquisition de la puissance fournie en sortie de chaque batterie principale. Ils comportent un module de surveillance de la puissance PW fournie en sortie et de comparaison M100 de cette puissance avec la valeur seuil PW_TH. Lorsque la puissance PW demandée par l'équipement consommateur de la batterie principale dépasse ce seuil de puissance PW_TH, les moyens de traitement et de commande UC activent un module de commande M200 configuré pour envoyer des commandes CDE2 aux moyens de commutation du système pour entraîner une connexion de la batterie de secours B_S en renfort de la batterie principale qui est à soutenir pour le passage du pic de puissance.

En tenant compte de l'état de charge de chaque batterie principale et de l'état de charge de la batterie auxiliaire B_aux (si présente), ainsi que du mode de traitement choisi, les moyens de traitement et de commande UC déterminent une configuration de connexion adaptée du système, en commandant de manière sélective divers moyens de commutation.

Le système peut ainsi comporter :
- Des premiers moyens de commutation agencés pour connecter ou déconnecter chaque batterie principale B_1, B_2, B_3 de l'équipement consommateur auquel elle est associée ;
- Des deuxièmes moyens de commutation agencés pour connecter ou déconnecter chaque batterie principale avec chaque autre batterie principale du pack ;

Le système peut également comporter des troisièmes moyens de commutation agencés pour connecter ou déconnecter chaque batterie principale B_1, B_2, B_3 et la batterie auxiliaire B_aux d'un réseau d'alimentation électrique R, permettant leur recharge.

Le système peut également comporter des quatrièmes moyens de commutation agencés pour connecter ou déconnecter la batterie auxiliaire B_aux (si présente) à chaque batterie principale B_1, B_2, B_3.

Pour la première batterie principale B_1, les premiers moyens de commutation comportent des interrupteurs S1 chargés de connecter ou déconnecter la première batterie principale de son équipement consommateur E_1.

Pour la deuxième batterie principale B_2, les premiers moyens de commutation comportent des interrupteurs S2 chargés de connecter ou déconnecter la deuxième batterie principale de son équipement consommateur E_2.

Pour la troisième batterie principale B_3, les premiers moyens de commutation comportent des interrupteurs S3 chargés de connecter ou déconnecter la troisième batterie principale de son équipement consommateur E_3.

Les deuxièmes moyens de commutation comportent des interrupteurs S12, S13, S23 chargés de commander la connexion ou la déconnexion, respectivement de la première batterie B_1 à la deuxième batterie B_2, de la première batterie B_1 à la troisième batterie B_3 et de la deuxième batterie B_2 à la troisième batterie B_3.

Les troisièmes moyens de commutations comportent des interrupteurs S100, S200, S300 chargés de commander la connexion ou la déconnexion, respectivement de la première batterie principale B_1, de la deuxième batterie principale B_2 et de la troisième batterie principale B_3 au réseau électrique R et des interrupteurs S400 chargés de commander la connexion ou la déconnexion de la batterie auxiliaire B_aux au réseau électrique R.

Les quatrièmes moyens de commutation comportent des interrupteurs S10, S20, S30 chargés de commander la connexion ou la déconnexion, respectivement de la première batterie principale B_1, de la deuxième batterie principale B_2 et de la troisième batterie principale B_3 à la batterie auxiliaire B_aux.

Les interrupteurs peuvent être formés de contacteurs électromécaniques commandables à l'ouverture ou à la fermeture ou encore de relais statiques (basés sur des interrupteurs à semi-conducteurs).

De manière non limitative, on considère que le système est triphasé, les interrupteurs S1, S2, S3, S12, S13, S23, S10, S20, S30, S100, S200, S300, S400 évoqués ci-dessus comportent chacun alors au moins deux interrupteurs.

En référence à la figure 2, les moyens de traitement et de commande UC sont configurés pour commander les premiers moyens de commutation, les deuxièmes moyens de commutation, les troisièmes moyens de commutation et les quatrièmes moyens de commutation, en tenant compte du mode de traitement appliqué. Sur les figures 1 et 2, les quatrièmes moyens de commutation sont représentés, mais ils sont à considérer comme optionnels si la batterie auxiliaire B_aux est absente du système.

A titre d'exemple, différentes configurations de connexion sont décrites ci-dessous en liaison avec les figures 3A à 3C.

Sur la figure 3A, la batterie auxiliaire est présente et sélectionnée comme la batterie de secours (=B_S).

En référence à la figure 3A, une première configuration de connexion consiste par exemple à :
- Commander à la fermeture les interrupteurs S1 et S3 pour connecter la première batterie principale B_1 et la troisième batterie principale B_3 respectivement au premier équipement consommateur E_1 et au troisième équipement consommateur E_3.
- Commander à l'ouverture les interrupteurs S2 pour déconnecter la deuxième batterie principale B_2 du deuxième équipement consommateur E_2.
- Commander à la fermeture les interrupteurs S20 pour connecter la batterie auxiliaire, sélectionnée comme batterie de secours B_S à la deuxième batterie principale B_2 en vue de charger cette dernière.
- Les interrupteurs S10, S30 et S100, S200, S300 et S400 sont commandés à l'ouverture.

Sur la figure 3B, la batterie auxiliaire B_aux est présente et sélectionnée comme la batterie de secours (=B_S).

En référence à la figure 3B, une deuxième configuration de connexion consiste par exemple à :
- Commander à la fermeture les interrupteurs S1 et S3 pour connecter la première batterie principale B_1 et la troisième batterie principale B_3 respectivement au premier équipement consommateur E_1 et au troisième équipement consommateur E_3.
- Commander à la fermeture les interrupteurs S2 pour connecter la deuxième batterie principale B_2 au deuxième équipement consommateur E_2.
- Commander à la fermeture les interrupteurs S20 pour connecter la batterie auxiliaire, sélectionnée comme batterie de secours B_S, à la deuxième batterie principale B_2, de manière à venir en soutien de la deuxième batterie principale B_2 dans l'alimentation du deuxième équipement consommateur E_2.
- Les interrupteurs S10, S30 et S100, S200, S300 et S400 sont commandés à l'ouverture.

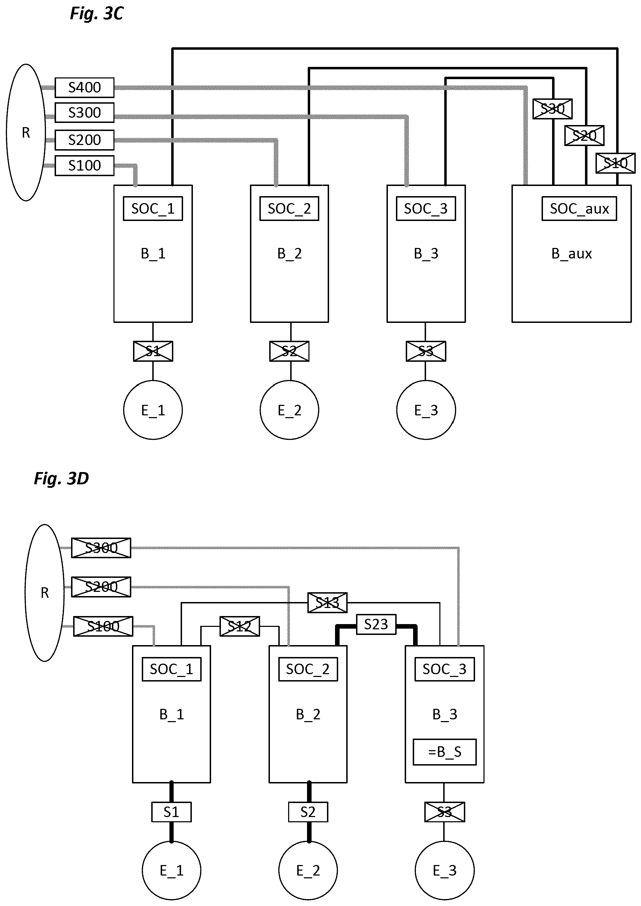

Sur la figure 3C, les batteries principales se rechargent sur le réseau R.

En référence à la figure 3C, une troisième configuration de connexion consiste par exemple à :
- Commander à la fermeture les interrupteurs S100, S200, S300 et S400 pour connecter respectivement la première batterie principale B_1, la deuxième batterie principale B_2, la troisième batterie principale B_3 et la batterie auxiliaire B_aux au réseau électrique R, en vue d'être rechargée.
- Commander à l'ouverture les interrupteurs S1, S2, S3 pour déconnecter respectivement la première batterie principale B_1 du premier équipement consommateur E_1, la deuxième batterie principale B_2 du deuxième équipement consommateur E_2, la troisième batterie principale B_3 du troisième équipement consommateur E_3.
- Commander à l'ouverture les interrupteurs S10, S20, S30 pour déconnecter la batterie auxiliaire B_aux respectivement de la première batterie principale B_1, de la deuxième batterie principale B_2 et de la troisième batterie principale B_3.

Sur la figure 3D, la batterie auxiliaire B_aux est absente du système. Les moyens de traitement et de commande UC sont ainsi configurés pour sélectionner une batterie de secours B_S parmi les batteries principales présentes et dans un état secondaire (à l'arrêt). Sur cette figure 3D, la batterie B_3 est sélectionnée comme batterie de secours B_S. La configuration de fonctionnement déterminée, consiste à ce que la batterie de secours vienne en soutien de la batterie B_2.

En référence à la figure 3D, une quatrième configuration de connexion consiste par exemple à :
- Commander à la fermeture les interrupteurs S1 et S2 pour connecter la première batterie principale B_1 et la deuxième batterie principale B_2 respectivement au premier équipement consommateur E_1 et au deuxième équipement consommateur E_2.
- Commander à l'ouverture les interrupteurs S3 pour déconnecter la troisième batterie principale B_3 du troisième équipement consommateur E_3.
- Commander à la fermeture les interrupteurs S23 pour connecter la batterie de secours B_S sélectionnée à la deuxième batterie principale B_2, de manière à venir en soutien de la deuxième batterie principale B_2 dans l'alimentation du deuxième équipement consommateur E_2.
- Les interrupteurs S10, S30 et S100, S200, S300 sont commandés à l'ouverture.

Bien entendu, d'autres configurations de connexion pourraient être envisagées et ces configurations sont données à titre d'exemple, certaines décrites ci-dessus étant adaptables à un système dénué de la batterie auxiliaire B_aux.

L'invention présente ainsi de nombreux avantages, parmi lesquels :
- Elle permet d'alimenter plusieurs équipements consommateurs, sans surdimensionner les batteries qui sont utilisées ;
- Elle permet une grande modularité, dans la gestion des batteries ;
- Elle est simple à mettre en œuvre et fonctionne en se basant sur des paramètres déjà disponibles, comme l'état de charge des batteries ;
- Elle permet l'utilisation de batteries à cellules commutées, tout en conservant les avantages d'une solution classique à bus partagé ;

## Revendications

1. Système d'alimentation électrique comprenant :
- Plusieurs batteries électriques (B_1, B_2, B_3, B_aux), chaque batterie électrique comportant plusieurs cellules connectées en série et/ou parallèle et des moyens de commutation distincts attachées à chaque cellule ou à un groupe de plusieurs cellules, lesdites plusieurs batteries comportant des batteries dites principales (B_1, B_2, B_3) dédiées chacune à la fourniture d'énergie électrique à destination d'un équipement consommateur distinct,
- Des moyens de traitement et de commande,
Les moyens de traitement et de commande comportant :
- Des moyens de sélection d'au moins une batterie dite de secours (B_S) parmi lesdites plusieurs batteries, la batterie de secours sélectionnée étant une batterie dont le courant de sortie est nul ;
- Des moyens de détermination d'une configuration de fonctionnement parmi au moins deux configurations de fonctionnement :
∘ Une première configuration dans laquelle la batterie de secours (B_S) sélectionnée vient au soutien de l'une des batteries principales ;
∘ Une deuxième configuration dans laquelle la batterie de secours (B_S) sélectionnée vient charger au moins une batterie principale ;
- Des moyens de commande adaptés pour assurer une configuration de connexion de la batterie de secours (B_S) sélectionnée à la batterie principale selon la configuration de fonctionnement déterminée, les moyens de traitement et de commande comportent également :
- Un premier module d'acquisition d'un état de charge réel de chaque batterie principale (B_1, B_2, B_3),
- Un module de détermination d'un écart entre l'état de charge réel et un état de charge théorique et/ou de détermination d'une pente de variation de l'état de charge réel, l'état de charge théorique correspondant à l'état de charge dans lequel la batterie devrait se trouver si elle est utilisée suivant le régime de fonctionnement en cours,
- Un premier module de comparaison dudit écart avec un premier écart seuil et/ou de comparaison de la pente de variation avec une première pente seuil, et
- Un premier module de commande activé lorsque l'écart déterminé dépasse ledit premier écart seuil et/ou lorsque la pente déterminée dépasse ladite première pente seuil et configuré pour activer un soutien à la batterie principale à l'aide de la batterie de secours sélectionnée en maintenant la batterie principale connectée à sor équipement consommateur.

2. Système selon la revendication 1 dont les moyens de traitement et de commande (UC) sont configurés pour mettre en œuvre un mode de traitement choisi parmi lesdits modes de traitements suivants :
- Un premier mode de traitement dans lequel, lors de son utilisation, l'état de charge réel (SOC_R) de chaque batterie principale est maintenu dans l'état de charge théorique (SOC_TH), déterminé en fonction de son cycle d'utilisation ;
- Un deuxième mode de traitement dans lequel l'état de charge de chaque batterie principale est maintenu au-dessus d'une valeur seuil ;
- Un troisième mode de traitement dans lequel les moyens de traitement et de commande (UC) sont configurés pour surveiller le niveau de puissance requis par chaque équipement consommateur par rapport à un niveau de puissance seuil.

3. Système selon la revendication 1 ou 2, **caractérisé en ce qu'**il comporte des premiers moyens de commutation comportant plusieurs interrupteurs (S1, S2, S3) agencés pour commander une connexion ou une déconnexion de chaque batterie principale (B_1, B_2, B_3) de l'équipement consommateur auquel elle est associée.

4. Système selon l'une des revendications 1 à 3, **caractérisé en ce qu'**il comporte des deuxièmes moyens de commutation comportant plusieurs interrupteurs (S12, S13, S23) agencés pour commander une connexion ou une déconnexion de chaque batterie principale (B_1, B_2, B_3) avec chaque autre batterie principale.

5. Système selon l'une des revendications 1 à 4, **caractérisé en ce qu'**il comporte des troisièmes moyens de commutation commandables par les moyens de traitement et de commande (UC) et agencés pour commander une connexion ou une déconnexion de chaque batterie (B_1, B_2, B_3) à un réseau électrique d'alimentation.

6. Système selon l'une des revendications 1 à 5, **caractérisé en ce que** lesdites plusieurs batteries électriques comportent une batterie auxiliaire qui n'est pas associée à un équipement consommateur.

7. Système selon la revendication 6, **caractérisé en ce qu'**il comporte des quatrièmes moyens de commutation commandables par les moyens de traitement et de commande (UC) et agencés pour commander une connexion ou une déconnexion de la batterie auxiliaire avec chaque batterie principale (B_1, B_2, B_3).

8. Système selon la revendication 1, **caractérisé en ce que** les moyens de traitement et de commande comportent :
- Un deuxième module de comparaison dudit écart avec un deuxième écart seuil, supérieur au premier écart seuil, et/ou de la pente de variation avec une deuxième pente seuil, supérieure à la première pente seuil, et
- Un deuxième module de commande activé lorsque l'écart déterminé dépasse ledit deuxième écart seuil et/ou lorsque la pente déterminée dépasse ladite deuxième pente seuil et configuré pour activer une déconnexion de la batterie principale de son équipement consommateur et une connexion pour recharge de ladite batterie principale à la batterie secondaire (B_S) ou à un réseau électrique (R).

9. Système selon la revendication 8, **caractérisé en ce que**, appliqué à chaque batterie principale, les moyens de traitement et de commande (UC) comportent :
- Un deuxième module d'acquisition de la puissance électrique fournie par chaque batterie principale (B_1, B_2, B_3) à son équipement consommateur,
- Un troisième module de comparaison de la puissance fournie par chaque batterie avec une valeur seuil,
- Un troisième module de commande activé lorsque ladite puissance fournie par une batterie principale dépasse ladite valeur seuil et configuré pour activer un soutien à la batterie principale à l'aide de la batterie de secours.

10. Système selon l'une des revendications 1 à 9, **caractérisé en ce que** chaque cellule comportant des moyens de commutation.

11. Procédé de commande mis en œuvre dans un système d'alimentation électrique tel que défini dans l'une des revendications 1 à 10, **caractérisé en ce qu'**il comporte les étapes suivantes : - Sélection d'au moins une batterie dite de secours (B_S) parmi lesdites plusieurs batteries, la batterie de secours sélectionnée étant une batterie dont le courant de sortie est nul,
- Détermination d'une configuration de fonctionnement parmi au moins deux configurations de fonctionnement :
o Une première configuration dans laquelle la batterie de secours (B_S) sélectionnée vient au soutien de l'une des batteries principales ;
o Une deuxième configuration dans laquelle la batterie de secours (B_S) sélectionnée vient charger au moins une batterie principale ;
- Acquisition d'un état de charge réel de chaque batterie principale (B_1, B_2, B_3),
- Détermination d'un écart entre l'état de charge réel et un état de charge théorique et/ou d'une pente de variation de l'état de charge réel, l'état de charge théorique correspondant à l'état de charge dans lequel la batterie devrait se trouver si elle est utilisée suivant le régime de fonctionnement en cours,
- Première comparaison dudit écart avec un premier écart seuil et/ou de la pente de variation avec une première pente seuil, et
- Lorsque l'écart déterminé dépasse ledit premier écart seuil et/ou lorsque la pente déterminée dépasse ladite première pente seuil, génération d'une commande d'une recharge de la batterie principale à l'aide de la batterie de secours sélectionnée er maintenant la batterie principale connectée à son équipement consommateur.

12. Procédé selon la revendication 11, **caractérisé en ce qu'**il comporte les étapes suivantes :
- Deuxième comparaison dudit écart avec un deuxième écart seuil, supérieur au premier écart seuil, et/ou de la pente de variation avec une deuxième pente seuil, supérieure à la première pente seuil, et
- Lorsque l'écart déterminé dépasse ledit deuxième écart seuil et/ou lorsque la pente déterminée dépasse ladite deuxième pente seuil, génération d'une commande de déconnexion de la batterie principale de son équipement consommateur et une connexion pour recharge de ladite batterie principale à la batterie de secours sélectionnée (B_S) ou à un réseau électrique (R).

13. Procédé selon la revendication 12, **caractérisé en ce qu'**il comporte les étapes suivantes :
- Acquisition de la puissance électrique fournie par chaque batterie principale (B_1, B_2, B_3) à son équipement consommateur,
- Comparaison de la puissance fournie par chaque batterie avec une valeur seuil,
- Lorsque ladite puissance fournie par une batterie principale dépasse ladite valeur seuil, activation d'un soutien à la batterie principale à l'aide de la batterie de secours sélectionnée..

14. Utilisation du système d'alimentation électrique tel que défini dans l'une des revendications 1 à 10, pour alimenter des moteurs électriques embarqués dans un véhicule électrique ou hybride.

## Patentansprüche

1. Stromversorgungssystem, umfassend:
- mehrere elektrische Batterien (B_1, B_2, B_3, B_aux), wobei jede elektrische Batterie mehrere in Reihe und/oder parallel geschaltete Zellen und separate Schaltmittel umfasst, die an jeder Zelle oder einer Gruppe mehrerer Zellen angebracht sind, wobei die mehreren Batterien sogenannte Hauptbatterien (B_1, B_2, B_3) umfassen, die jeweils für die Lieferung von elektrischer Energie an ein separates Verbrauchergerät vorgesehen sind,
- Verarbeitungs- und Steuermittel,
wobei die Verarbeitungs- und Steuermittel umfassen:
- Mittel zur Auswahl mindestens einer sogenannten Notfallbatterie (B_S) aus den mehreren Batterien, wobei die ausgewählte Notfallbatterie eine Batterie ist, deren Ausgangsstrom null ist;
- Mittel zur Bestimmung einer Betriebskonfiguration aus mindestens zwei Betriebskonfigurationen:
∘ einer ersten Konfiguration, in der die ausgewählte Notfallbatterie (B_S) eine der Hauptbatterien unterstützt;
∘ einer zweiten Konfiguration, in der die ausgewählte Notfallbatterie (B_S) mindestens eine Hauptbatterie auflädt;
- Steuermittel, die dazu angepasst sind, eine Verbindungskonfiguration der ausgewählten Notfallbatterie (B_S) mit der Hauptbatterie entsprechend der bestimmten Betriebskonfiguration sicherzustellen,
wobei die Verarbeitungs- und Steuermittel auch umfassen:
- ein erstes Modul zur Erfassung eines tatsächlichen Ladezustands jeder Hauptbatterie (B_1, B_2, B_3),
- ein Modul zur Bestimmung einer Abweichung zwischen dem tatsächlichen Ladezustand und einem theoretischen Ladezustand und/oder zur Bestimmung einer Änderungssteilheit des tatsächlichen Ladezustands, wobei der theoretische Ladezustand dem Ladezustand entspricht, in dem sich die Batterie befinden müsste, wenn sie gemäß der aktuellen Betriebsart verwendet werden würde,
- ein erstes Modul zum Vergleich der Abweichung mit einer ersten Schwellenabweichung und/oder zum Vergleich der Änderungssteilheit mit einer ersten Schwellensteilheit, und
- ein erstes Steuermodul, das aktiviert wird, wenn die bestimmte Abweichung den ersten Abweichungsschwellenwert überschreitet und/oder wenn die bestimmte Steilheit die erste Schwellensteilheit überschreitet, und das so konfiguriert ist, dass es eine Unterstützung der Hauptbatterie mithilfe der ausgewählten Notfallbatterie aktiviert, indem es die Hauptbatterie mit ihrem Verbrauchergerät verbunden hält.

2. System nach Anspruch 1, dessen Verarbeitungs- und Steuermittel (UC) so konfiguriert sind, dass sie einen aus den folgenden Verarbeitungsmodi ausgewählten Verarbeitungsmodus ausführen:
- einen ersten Verarbeitungsmodus, in dem während des Betriebs der tatsächliche Ladezustand (SOC_R) jeder Hauptbatterie auf dem theoretischen Ladezustand (SOC_TH) gehalten wird, der entsprechend ihrem Nutzungszyklus bestimmt wird;
- einen zweiten Verarbeitungsmodus, in dem der Ladezustand jeder Hauptbatterie über einem Schwellenwert gehalten wird;
- einen dritten Verarbeitungsmodus, in dem die Verarbeitungs- und Steuermittel (UC) so konfiguriert sind, dass sie den von jedem Verbrauchergerät benötigten Leistungspegel im Verhältnis zu einem Leistungspegelschwellenwert überwachen.

3. System nach Anspruch 1 oder 2, **dadurch gekennzeichnet, dass** es erste Schaltmittel umfasst, die mehrere Schalter (S1, S2, S3) umfassen, die so angeordnet sind, dass sie eine Verbindung oder Trennung jeder Hauptbatterie (B_1, B_2, B_3) von dem Verbrauchergerät, dem sie zugeordnet ist, steuern.

4. System nach einem der Ansprüche 1 bis 3, **dadurch gekennzeichnet, dass** es zweite Schaltmittel umfasst, die mehrere Schalter (S12, S13, S23) umfassen, die so angeordnet sind, dass sie eine Verbindung oder Trennung jeder Hauptbatterie (B_1, B_2, B_3) mit/von jeder anderen Hauptbatterie steuern.

5. System nach einem der Ansprüche 1 bis 4, **dadurch gekennzeichnet, dass** es dritte Schaltmittel umfasst, die von den Verarbeitungs- und Steuermitteln (UC) gesteuert werden können und so angeordnet sind, dass sie eine Verbindung oder Trennung jeder Batterie (B_1, B_2, B_3) mit/von einem Stromversorgungsnetz steuern.

6. System nach einem der Ansprüche 1 bis 5, **dadurch gekennzeichnet, dass** die mehreren elektrischen Batterien eine Hilfsbatterie umfassen, die keinem Verbrauchergerät zugeordnet ist.

7. System nach Anspruch 6, **dadurch gekennzeichnet, dass** es vierte Schaltmittel umfasst, die von den Verarbeitungs- und Steuermitteln (UC) gesteuert werden können und dazu angeordnet sind, eine Verbindung oder Trennung der Hilfsbatterie mit/von jeder Hauptbatterie (B_1, B_2, B_3) zu steuern.

8. System nach Anspruch 1, **dadurch gekennzeichnet, dass** die Verarbeitungs- und Steuermittel umfassen:
- ein zweites Modul zum Vergleich der Abweichung mit einer zweiten Schwellenabweichung, die größer ist als die erste Schwellenabweichung, und/oder der Änderungssteilheit mit einer zweiten Schwellensteilheit, die größer ist als die erste Schwellensteilheit, und
- ein zweites Steuermodul, das aktiviert wird, wenn die bestimmte Abweichung den zweiten Abweichungsschwellenwert überschreitet und/oder wenn die bestimmte Steilheit die zweite Schwellensteilheit überschreitet, und das so konfiguriert ist, dass es eine Trennung der Hauptbatterie von ihrem Verbrauchergerät und eine Verbindung zum Aufladen der Hauptbatterie mit der Sekundärbatterie (B_S) oder einem Stromnetz (R) aktiviert.

9. System nach Anspruch 8, **dadurch gekennzeichnet, dass** die Verarbeitungs- und Steuermittel (UC), die bei jeder Hauptbatterie angewandt werden, Folgendes umfassen:
- ein zweites Modul zur Erfassung der von jeder Hauptbatterie (B_1, B_2, B_3) an ihr Verbrauchergerät gelieferten elektrischen Leistung,
- ein drittes Modul zum Vergleich der von jeder Batterie gelieferten Leistung mit einem Schwellenwert,
- ein drittes Steuermodul, das aktiviert wird, wenn die von einer Hauptbatterie gelieferte Leistung den Schwellenwert überschreitet, und das so konfiguriert ist, dass es eine Unterstützung der Hauptbatterie durch die Notfallbatterie aktiviert.

10. System nach einem der Ansprüche 1 bis 9, **dadurch gekennzeichnet, dass** jede Zelle Schaltmittel umfasst.

11. Steuerverfahren, das in einem Stromversorgungssystem nach einem der Ansprüche 1 bis 10 ausgeführt wird, **dadurch gekennzeichnet, dass** es die folgenden Schritte umfasst:
- Auswahl mindestens einer sogenannten Notfallbatterie (B_S) aus den mehreren Batterien, wobei die ausgewählte Notfallbatterie eine Batterie ist, deren Ausgangsstrom null ist,
- Bestimmung einer Betriebskonfiguration aus mindestens zwei Betriebskonfigurationen:
∘ einer ersten Konfiguration, in der die ausgewählte Notfallbatterie (B_S) eine der Hauptbatterien unterstützt;
∘ einer zweiten Konfiguration, in der die ausgewählte Notfallbatterie (B_S) mindestens eine Hauptbatterie auflädt;
- Erfassung eines tatsächlichen Ladezustands jeder Hauptbatterie (B_1, B_2, B_3),
- Bestimmung einer Abweichung zwischen dem tatsächlichen Ladezustand und einem theoretischen Ladezustand und/oder einer Änderungssteilheit des tatsächlichen Ladezustands, wobei der theoretische Ladezustand dem Ladezustand entspricht, in dem sich die Batterie befinden müsste, wenn sie gemäß der aktuellen Betriebsart verwendet werden würde,
- erster Vergleich der Abweichung mit einer ersten Schwellenabweichung und/oder der Änderungssteilheit mit einer ersten Schwellensteilheit, und
- wenn die bestimmte Abweichung den ersten Abweichungsschwellenwert überschreitet und/oder wenn die bestimmte Steilheit die erste Schwellensteilheit überschreitet, Erzeugen eines Steuerbefehls zum Aufladen der Hauptbatterie mithilfe der ausgewählten Notfallbatterie, wobei die Hauptbatterie mit ihrem Verbrauchergerät verbunden bleibt.

12. Verfahren nach Anspruch 11, **dadurch gekennzeichnet, dass** es die folgenden Schritte umfasst:
- zweiter Vergleich der Abweichung mit einer zweiten Schwellenabweichung, die größer ist als die erste Schwellenabweichung, und/oder der Änderungssteilheit mit einer zweiten Schwellensteilheit, die größer ist als die erste Schwellensteilheit, und
- wenn die bestimmte Abweichung den zweiten Abweichungsschwellenwert überschreitet und/oder wenn die bestimmte Steilheit die zweite Schwellensteilheit überschreitet, Erzeugung eines Steuerbefehls zum Trennen der Hauptbatterie von ihrem Verbrauchergerät und zum Anschließen der Hauptbatterie zum Aufladen an die ausgewählte Notfallbatterie (B_S) oder an ein Stromnetz (R).

13. Verfahren nach Anspruch 12, **dadurch gekennzeichnet, dass** es die folgenden Schritte umfasst:
- Erfassung der von jeder Hauptbatterie (B_1, B_2, B_3) an ihr Verbrauchergerät gelieferten elektrischen Leistung,
- Vergleich der von jeder Batterie gelieferten Leistung mit einem Schwellenwert,
- wenn die von einer Hauptbatterie gelieferte Leistung den Schwellenwert überschreitet, Aktivierung einer Unterstützung für die Hauptbatterie mit Hilfe der ausgewählten Notfallbatterie..

14. Verwendung des Stromversorgungssystems nach einem der Ansprüche 1 bis 10 zur Versorgung von Elektromotoren, die in einem Elektro- oder Hybridfahrzeug eingerichtet sind.

## Claims

1. Power supply system comprising :
- A plurality of electrical batteries (B_1, B_2, B_3, B_aux), each electrical battery comprising a plurality of cells connected in series and/or parallel and separate switching means attached to each cell or to a group of a plurality of cells, said plurality of batteries comprising so-called main batteries (B_1, B_2, B_3) each dedicated to supplying electrical energy to a separate piece of consumer equipment,
- Processing and control resources,
Processing and control means comprising :
- Means for selecting at least one so-called back-up battery (B_S) from said several batteries, the back-up battery selected being a battery whose output current is zero;
- Means for determining one of at least two operating configurations:
∘ A first configuration in which the selected back-up battery (B_S) supports one of the main batteries;
∘ A second configuration in which the selected back-up battery (B_S) charges at least one main battery;
- Control means adapted to ensure a connection configuration of the selected back-up battery (B_S) to the main battery according to the determined operating configuration,
the processing and control means also include :
- A first module for acquiring the actual state of charge of each main battery (B_1, B_2, B_3),
- A module for determining a difference between the actual state of charge and a theoretical state of charge and/or for determining a slope of variation of the actual state of charge, the theoretical state of charge corresponding to the state of charge in which the battery should be if it is used according to the current operating regime,
- A first module for comparing said deviation with a first threshold deviation and/or for comparing the variation slope with a first threshold slope, and
- A first control module activated when the determined deviation exceeds said first threshold deviation and/or when the determined slope exceeds said first threshold slope and configured to activate support for the main battery using the selected back-up battery while maintaining the main battery connected to its consumer equipment.

2. System according to claim 1, in which the processing and control means (UC) are configured to implement a processing mode chosen from the following processing modes:
- A first processing mode in which, during its use, the actual state of charge (SOC_R) of each main battery is maintained in the theoretical state of charge (SOC_TH), determined as a function of its duty cycle;
- A second processing mode in which the state of charge of each main battery is maintained above a threshold value;
- A third processing mode in which the processing and control means (PCU) is configured to monitor the power level required by each piece of consumer equipment in relation to a threshold power level.

3. A system as claimed in claim 1 or 2, **characterised in that** it comprises first switching means comprising a plurality of switches (S1, S2, S3) arranged to control connection or disconnection of each main battery (B_1, B_2, B_3) from the consumer equipment with which it is associated.

4. System according to one of claims 1 to 3, **characterised in that** it comprises second switching means comprising several switches (S12, S13, S23) arranged to control connection or disconnection of each main battery (B_1, B_2, B_3) with each other main battery.

5. System according to one of claims 1 to 4, **characterised in that** it comprises third switching means controllable by the processing and control means (UC) and arranged to control connection or disconnection of each battery (B_1, B_2, B_3) to an electrical supply network.

6. A system according to one of claims 1 to 5, **characterised in that** said plurality of electrical batteries comprises an auxiliary battery which is not associated with any consumer equipment.

7. A system as claimed in claim 6, **characterised in that** it comprises fourth switching means controllable by the processing and control means (UC) and arranged to control connection or disconnection of the auxiliary battery with each main battery (B_1, B_2, B_3).

8. A system as claimed in claim 1, **characterised in that** the processing and control means comprise :
- A second module for comparing said deviation with a second threshold deviation, greater than the first threshold deviation, and/or the variation slope with a second threshold slope, greater than the first threshold slope, and
- A second control module activated when the determined deviation exceeds said second threshold deviation and/or when the determined slope exceeds said second threshold slope and configured to activate disconnection of the main battery from its consumer equipment and connection for recharging of said main battery to the secondary battery (B_S) or to an electrical network (R).

9. System according to claim 8, **characterized in that**, applied to each main battery, the processing and control means (UC) comprise :
- A second module for acquiring the electrical power supplied by each main battery (B_1, B_2, B_3) to its consumer equipment,
- A third module for comparing the power supplied by each battery with a threshold value,
- A third control module activated when said power supplied by a main battery exceeds said threshold value and configured to activate support for the main battery using the back-up battery.

10. System according to one of claims 1 to 9, **characterised in that** each cell comprises switching means.

11. A control method implemented in a power supply system as defined in one of claims 1 to 10, **characterised in that** it comprises the following steps:
- Selection of at least one back-up battery (B_S) from said plurality of batteries, the back-up battery being a battery whose output current is zero,
- Determining one of at least two operating configurations:
∘ A first configuration in which the selected back-up battery (B_S) supports one of the main batteries;
∘ A second configuration in which the selected back-up battery (B_S) charges at least one main battery;
- Acquisition of a real state of charge for each main battery (B_1, B_2, B_3),
- Determination of a difference between the actual state of charge and a theoretical state of charge and/or of a slope of variation of the actual state of charge, the theoretical state of charge corresponding to the state of charge in which the battery should be if it is used according to the current operating regime,
- First comparison of said deviation with a first threshold deviation and/or of the variation slope with a first threshold slope, and
- When the determined deviation exceeds said first threshold deviation and/or when the determined slope exceeds said first threshold slope, a command to recharge the main battery using the selected back-up battery is generated while keeping the main battery connected to its consumer equipment.

12. Process according to claim 11, **characterized in that** it comprises the following steps:
- Second comparison of said deviation with a second threshold deviation, greater than the first threshold deviation, and/or of the variation slope with a second threshold slope, greater than the first threshold slope, and
- When the determined deviation exceeds said second threshold deviation and/or when the determined slope exceeds said second threshold slope, generation of a command to disconnect the main battery from its consumer equipment and a connection for recharging said main battery to the selected back-up battery (B_S) or to an electrical network (R).

13. Process according to claim 12, **characterized in that** it comprises the following steps:
- Acquisition of the electrical power supplied by each main battery (B_1, B_2, B_3) to its consumer equipment,
- Comparison of the power supplied by each battery with a threshold value,
- When said power supplied by a main battery exceeds said threshold value, activation of support for the main battery using the selected back-up battery.

14. Use of the electrical power supply system as defined in one of claims 1 to 10, to power on-board electric motors in an electric or hybrid vehicle.
